# EUROPÄISCHE PATENTANMELDUNG

(11) **EP 1 375 104 A1**
(43) Veröffentlichungstag der Anmeldung: **02.01.2004**
(21) Anmeldenummer: 03013534.7
(22) Anmeldetag: 13.06.2003
(51) Int. Cl.: B29B 17/00, B29C 67/20, C08J 9/33

(54) **Verfahren zur Herstellung von Polyurethanformteilen und ihre Verwendung**

(30) Priorität: 26.06.2002 DE 10228473
(71) Anmelder: Bayer Aktiengesellschaft, 51368 Leverkusen (DE)
(72) Erfinder: Rasshofer, Werner, Dr., 51061 Köln (DE)

(57) **Zusammenfassung**

Die vorliegende Erfindung betrifft ein Verfahren zur Herstellung von Polyurethanformteilen, Blöcken und Zylindern aus Produktionsreststoffen und/oder aus sogenannten post-consumer-Teilen auf Polyurethanbasis durch die sogenannte Flockenverbundtechnik und ihre Verwendung.

## Beschreibung

Die vorliegende Erfindung betrifft ein Verfahren zur Herstellung von Polyurethanformteilen, Blöcken und Zylindern aus Produktionsreststoffen und/oder aus sogenannten post-consumer-Teilen auf Polyurethanbasis durch die sogenannte Flockenverbundtechnik und ihre Verwendung.

Die stoffliche Verwertung (Recycling) von Polyurethanweichschaumresten mit der Flockenverbundtechnologie ist bekannt. Dabei werden Polyurethanweichschaum-Reststoffe zerkleinert, mit einem 1- oder 2-Komponenten-Kleber (meistens auf Isocyanatbasis, wobei alternativ auch thermoplastische Materialien oder Phenolharze als Kleber zum Einsatz kommen können) versetzt und mit Wasserdampf ausgehärtet. Im Falle der Herstellung von Blöcken oder Zylindern werden diese zu Formteilen, Bahnenware oder Platten weiterverarbeitet. Die Herstellung der Blöcke/Zylinder oder der Formteile kann unter Mitverwendung von weiteren Materialien, wie z.B. Füllstoffen, Verstärkungsstoffen, z.B. Fasern, oder Zusatzmitteln, z.B. Flammschutzmitteln erfolgen. Es können auch anstelle von Blöcken/Zylindern direkt Formteile hergestellt werden. Anstelle von Weichschaum werden auch PU-Elastomerschaum-Reststoffe in geringen Mengen mit dieser Technologie verwertet.

Die so hergestellten Blöcke, Zylinder oder Formteile werden in verschiedenen Industriebereichen wie Möbel, Bau, Freizeit, Sport, Umwelttechnik eingesetzt, z.B. für Comfort-Anwendungen, wie z.B. Polstermöbel, Teppichhinterklebungen, Autoinnenraumanwendungen (z.B. Kopfstützen und Einlagen für Sitze), Matratzen, ferner Verpackungen und Akustikdämmungen und zum Schallschutz.

Die Flockenverbundtechnologie ist beispielsweise in EP-A 1 097 798, WO 2001/00718, US-A 6 136 870, JP-A 10 193 356, JP-A 09 302 219, WO 95/29951, WO 95/514055, EP-A 976 518 und DE-A 29 810 967 sowie G. Oertel, Polyurethane, Kunststoffhandbuch, 3. Auflage 1993, S. 210; W. Raßhofer, Recycling von Polyurethan-Kunststoffen, Hüthig-Verlag 1994, S. 139 und W. Raßhofer und E. Weigand, Recycling of Automotive Polyurethanes, Technomic Publ., 2001, S. 65 beschrieben. Produkte auf Basis dieser Technologie werden z.B. von der Firma Metzeler, Memmingen (Deutschland) angeboten.

Aus dem Schrifttum und der Praxis der Flockenverbundfertigung ist kein Hinweis auf die Verwendbarkeit von Hartschaum in der Flockenverbundfertigung abzuleiten. Im Gegenteil bestand beim Fachmann das Vorurteil, dass mit der ausschließlich hochflexible Schäume verwendenden Flockenverbundtechnik mit Hartschäumen kein vernünftiges Resultat erhalten werden kann.

Aufgabe der vorliegenden Erfindung war es, eine Möglichkeit der stofflichen Verwertung von Produktionsrohstoffen aus der Polyurethan-Hartschaumfertigung und von sogenannten post-consumer-Teilen auf Basis von Polyurethanhartschaum aufzuzeigen. Eine solche Verwertungsmöglichkeit ist wichtig, da zunehmend Umweltschutzgesetzgebungen, wie die europäische Altautoverordnung und die Elektro- und Elektronikschrott-Verordnung das Recycling von Kunststoffbauteilen fordern.

Diese Aufgabe konnte durch ein spezielles Verfahren zur Aufarbeitung der o.g. Reststoffe und post-consumer-Teile mittels der Flockenverbundtechnik gelöst werden.

Gegenstand der Erfindung ist ein Verfahren zur Herstellung von Blöcken, Zylindern oder Formteilen, welches dadurch gekennzeichnet ist, dass
a) Produktionsreststoffe aus der Polyurethan-Hartschaumfertigung und/oder post-consumer-Teile auf Basis von Polyurethanhartschaum und/oder Produktionsreststoffe aus der Fertigung solcher Teile gegebenenfalls zerkleinert werden,
b) ein flüssiges, reaktionsfähige NCO-Gruppen enthaltendes Bindemittel auf Basis eines Gemisches und/oder Reaktionsproduktes aus i) aromatischen und/oder aliphatischen Polyisocyanaten und ii) Polyolen zu den Stoffen und/oder Teilen unter a) zugegeben und gleichmäßig verteilt wird,
c) das Gemisch aus b) in ein Werkzeug gegeben wird,
d) Wasserdampf gegebenenfalls unter Druck in das Werkzeug zur Erzeugung des Formteiles, Blockes oder Zylinders eingeleitet wird,
e) ausgehärtet wird und
f) das Formteil, der Block oder Zylinder aus dem Werkzeug entfernt wird,
wobei der eingesetzte Polyurethanhartschaum unter a) ein offenzelliger Schaum mit einer Dichte von 5 bis 50 kg/m³ (gemessen nach DIN 53 420), einer Stauchhärte von 0,05 bis 0,2 MPa (gemessen nach DIN 53 421) und einer Offenzelligkeit von größer 50 % (bestimmt nach DIN ISO 4590-86) ist.

Als Polyurethan-Hartschaummaterial wird vorzugsweise Schaummaterial, wie es zur Herstellung von PU-Fertigdachhimmeln in Fahrzeugen verwendet wird, eingesetzt. Baynat® der Bayer AG, Leverkusen ist beispielsweise ein derartiges, bevorzugt eingesetztes Schaummaterial.

Bei der Produktion und Verarbeitung von offenzelligen Hartschäumen fallen Reststoffe in Mengen bis zu 25 Gew.-% der eingesetzten Rohstoffe an. Dabei können diese Reststoffe/Teile andere Produktionsbegleitstoffe, wie z.B. Papier, enthalten, ohne dass es bei ihrem Einsatz unter Schritt a) zu Verfahrensstörungen kommt. Derartige Produktionsbegleitstoffe können dann auch Bestandteil der erfindungsgemäß hergestellten Formteile, Blöcke und Zylinder sein.

Außer Reststoffen aus der Fertigung und der Weiterverarbeitung von offenzelligem Hartschaum können auch Reststoffe aus der Fertigung von Fertigprodukten auf Basis von offenzelligen Hartschäumen, wie z.B. Dachhimmel-Stanzabfälle oder auch gebrauchte Dachhimmel, wie sie beispielsweise bei der Entsorgung von Altautos anfallen, als Ausgangsmaterial bei der erfindungsgemäßen Herstellung der Blöcke, Zylinder und Formteile verwendet werden.

Komponente b) sind die ein- oder zweikomponentigen Bindemittel (Kleber). Sie stellen entweder Gemische oder Umsetzungsprodukte aus Isocyanaten b1) und gegenüber Isocyanaten reaktiven Komponenten b2) dar, z.B. aus 100 Tlen b1) und 100 bis 1000 Tlen b2).

Geeignete Isocyanate b1) sind Verbindungen mit einem über 137, vorzugsweise von 168 bis 290 liegenden Molekulargewicht mit ausschließlich (cyclo)aliphatisch gebundenen Isocyanatgruppen wie beispielsweise 1,6-Diisocyanatohexan, 1,12-Diisocyanatododecan, 1,3-Diisocyanatocyclobutan, 1,3- und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4'-Di-isocyanatodicyclohexylmethan oder beliebige Gemische derartiger einfacher (cyclo)aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemischen, Gemische von unmodifizierten Diisocyanaten mit den genannten modifizierten Polyisocyanaten können ebenfalls als Komponente b1) verwendet werden.

Weitere geeignete Isocyanate sind beliebige aromatische Polyisocyanate mit einem NCO-Gehalt von 10-50 Gew.%.

Bei der Komponente b2) handelt es sich um Verbindungen mit gegenüber Isocyanatgruppen reaktionsfähigen Gruppen des Molekulargewichtsbereichs 1.800 bis 12.000, vorzugsweise 3.000 bis 7.000 oder um Gemische derartiger Verbindungen, wobei die Komponente b2) im Sinne der Isocyanat-Additionsreaktion eine über 2,5, vorzugsweise bei 2,6 bis 3,0 und besonders bevorzugt bei 2,8 bis 3,0, liegende (mittlere) Funktionalität aufweist. Besonders gut als Komponente b2) geeignete Verbindungen sind diesen Ausführungen entsprechende Polyetherpolyole bzw. Gemische von Polyetherpolyolen wie sie in DE-A 2 622 951, Spalte 6, Zeile 65 bis Spalte 7, Zeile 47 offenbart sind, wobei auch erfindungsgemäß solche Polyetherpolyole bevorzugt sind, deren Hydroxylgruppen zumindest zu 50 % vorzugsweise zumindest zu 80 % aus primären Hydroxylgruppen bestehen. Auch die in DE-A 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b2) geeignet, sofern sie den oben gemachten Ausführungen entsprechen, jedoch gegenüber den Polyetherpolyolen weniger bevorzugt.

Die erfindungsgemäße Herstellung von Blöcken, Zylindern oder Formteilen erfolgt bevorzugt so, dass zuerst Produktionsreststoffe aus der Polyurethan-Hartschaumfertigung und/oder post-consumer-Teile auf Basis von Polyurethanhartschaum zerkleinert werden. Dies kann mit handelsüblichen Geräten wie Schneidemühlen oder Shreddern erfolgen. Dadurch erhält man sogenanntes Flockenmaterial. Danach wird ein flüssiges, reaktionsfähige NCO-Gruppen enthaltendes Bindemittel auf Basis eines Gemisches und/oder Reaktionsproduktes aus i) aromatischen und/oder aliphatischen Polyisocyanaten (z.B. monomeres oder polymeres MDI, TDI) und ii) Polyolen (z.B. mit Molekulargewichten um 6000, Funktionalitäten von etwa 3, 15 % endständigem Polyethylenoxid) zu den Flocken gegeben und gleichmäßig verteilt. Das Bindemittel zieht in die Flocken ein, härtet aber bei normalen Bedingungen nicht sofort aus. Danach werden die so beleimten Flocken in ein Werkzeug gegeben und durch Druckaufgabe und Volumenverminderung die gewünschte Dichte eingestellt, z.B. 80 oder 100 kg/m³. Gegebenenfalls wird die Oberfläche des eingefüllten Flockenmaterials äquilibriert. Durch Einleiten von Wasserdampf, gegebenenfalls unter Druck, in das Werkzeug wird das Material aufgeheizt und die Aushärtung durch Reaktion mit dem Wasser bewirkt. Nach der Aushärtung wird das Formteil, der Block oder Zylinder aus dem Werkzeug entfernt.

Anstelle einer Aushärtung mit Wasserdampf kann die Härtung auch durch mehrstündiges bis mehrtägiges Stehen bei RT erfolgen (nicht bevorzugt).

Die Eigenschaften der erfindungsgemäß hergestellten Formteile, Blöcke und Zylinder sind von den Eigenschaften der eingesetzten Hartschaummaterialien, des Bindemittels sowie den Mengen und Reaktionsparametern geprägt, wie z.B.
a) durchschnittliche Partikelgröße der Hartschaummaterialien, vorzugsweise 1 bis 80 mm, besonders bevorzugt 15 bis 80 mm,
b) die Verwendung eines Schneidmühlen-Siebs mit runden oder rechteckigen Löchern eines Durchmessers von z.B. 25 bis 80 mm, falls eine Schneidemühle zur Zerkleinerung verwendet wird,
c) Partikelgrößenverteilung, insbesondere Staubanteil,
d) Menge und Art des Bindemittels, vorzugsweise 5 bis 25 Gew.-%, bezogen auf 100 % Gew.-% Hartschaum,
e) Mischzeit unter Schritt b) des Verfahrens, vorzugsweise 1 bis 60 Minuten,
f) Füllgrad des Werkzeuges und Druck im Werkzeug,
g) Wasserdampftemperatur, vorzugsweise 105 bis 140°C, und Zeit, während der der Dampf beaufschlagt wird, z.B. 10 sec bis 5 min,
h) Aushärtezeit im Werkzeug, vorzugsweise 1 bis 60 Minuten.

Die erfindungsgemäß hergestellten Formteile, Blöcke und Zylinder bzw. die daraus zugeschnittenen Platten oder erhaltenen Bahnen weisen nach Lagerung vorzugsweise Dichten von 40 bis 200 kg/m³ auf.

Die beste Verfahrensweise für im wesentlichen Schaum wird bevorzugt mit folgenden Parametern ausgeführt:
1. Mittlere Teilchengröße des Flockenmaterials: 3-5 cm Durchmesser
2. Bindemittel: Prepolymer aus rohem MDI und einem Polyester mit Molekulargewicht 6000, Funktionalität 3 und 15 % endständigem Polyethylenoxid
3. Bindemittel: 15 Gew.-% Bindemittel auf 100 Gew.-Teile Flockenmaterial
4. NCO-Gehalt des Bindemittels: 3 %
5. Mischzeit des Bindemittels mit dem Flockenmaterial bei einer Füllmenge von 200 kg: 5 min
6. Einblaszeit des Wasserdampfes: 5 min
7. Temperatur des Wasserdampfes: 130°C
8. Nachhärtezeit (nach der Einblaszeit des Wasserdampfes): 0 min

Nicht bevorzugt, aber technisch problemlos durchführbar, ist der Zusatz von anderen Hilfs- und Zusatzstoffen, wie z.B. flammhemmenden Mitteln, wie Melamin, Blähgraphit oder Aluminiumoxid, und Verstärkungsmaterialien, wie z.B. Glas- und Jutefasern zur erfindungsgemäßen Herstellung der Formteile, Blöcke und Zylinder.

Zur Vermeidung von Hohlräumen in den erzeugten Blöcken kann es von Vorteil sein, durch Anwendung von Vibration oder anderen Schwingungsvorgängen eine möglichst massive Füllung der Werkzeuge und Vorverdichtung des Flockenmaterials zu erreichen.

Die Blöcke oder Zylinder können zu Platten- oder Bahnenware konfektioniert werden. Üblicherweise haben die Zuschnitte aus den Blöcken Dicken von z.B. 6 bis 30 mm, die dann weiter verarbeitet werden.

Diese Zuschnitte werden vorzugsweise zur Herstellung von Fertigartikel-Laminaten, wie z. B. Türinnenverkleidungen, Hutablagen, Kofferraumauskleidungen und Dachhimmeln eingesetzt, insbesondere in formgebenden Heißpressverfahren, wie z.B. im sogenannten kontinuierlichen Tramico-Verfahren oder auch in diskontinuierlichen Verfahren.

Weiterhin können plattenförmige Zuschnitte aus den Blöcken durch Imprägnierung oder Tränkung mit einem Polyisocyanat oder einer Polyisocyanat/Polyol-Mischung behandelt werden und dann laminatbildend verpresst werden.

Weiterhin ist die Verwendung zur Energierabsorption im Aufprallbereich in Fahrzeugen denkbar.

Möglich ist auch die Verwendung der erfindungsgemäßen Produkte im Baubereich, z.B. zur Trittschalldämmung.

Vorteil der erfindungsgemäß hergestellten Formteile, Blöcke und Zylinder bzw. des Verfahrens zu ihrer Herstellung ist, dass Produktionsrohstoffe, die insbesondere bei der diskontinuierlichen Herstellung anfallen, wieder verwertet werden und dadurch einer erneuten Verwendung zugänglich sind. Besonders bevorzugt können die Formteile, Blöcke und Zylinder im Kraftfahrzeugbereich nach entsprechender Verarbeitung wieder eingesetzt werden. Dadurch können sowohl die Forderungen der Altautoverordnung als auch die Erwartungen der Allgemeinheit an das Kunststoffrecyling erfüllt werden.

Die erfindungsgemäß hergestellten Blöcke, Zylinder und Formteile werden vorzugsweise zur Herstellung von Fertigartikel-Laminaten, wie z.B. Türinnenverkleidungen, Hutablagen, Kofferraumauskleidungen und Dachhimmeln eingesetzt.

Trotz des Einsatzes dieser Produktionsreststoffe aus der Hartschaumfertigung und der post-consumer-Teile auf Basis von Polyurethanhartschaum erhält man überraschenderweise Formteile, Blöcke und Zylinder mit akustischen Dämpfungseigenschaften, die denen von handelsüblichen Hartschäumen für Dachhimmel vergleichbar sind. Man hätte aufgrund der verminderten Offenzelligkeit wegen der zellschließenden Wirkung des zugesetzten Klebers erwartet, dass die Dämpfungseigenschaften der erfindungsgemäßen Formteile, Blöcke und Zylinder signifikant schlechter sind. In vielen Fällen sind die akkustischen Eigenschaften sogar deutlich besser als die der jungfräulichen Schäume, insbesondere im niederfrequenten Bereich unter 2000 Hz. Sie erfüllen auch ohne jede Zusätze in der Regel die Erfordernisse der Flammwidrigkeit nach FMVSS 302 und der horizontalen Brenngeschwindigkeit der Richtlinie 95/28/EG.

## Patentansprüche

1. Verfahren zur Herstellung von Formteilen, Blöcken und Zylinder, **dadurch gekennzeichnet, dass**
a) Produktionsreststoffe aus der Polyurethan-Hartschaumfertigung und/oder post-consumer-Teile auf Basis von Polyurethanhartschaum und/oder Produktionsreststoffe aus der Fertigung solcher Teile gegebenenfalls zerkleinert werden,
b) ein flüssiges, reaktionsfähige NCO-Gruppen enthaltendes Bindemittel auf Basis eines Gemisches und/oder Reaktionsproduktes aus i) aromatischen und/oder aliphatischen Polyisocyanaten und ii) Polyolen zu den Stoffen und/oder Teilen unter a) zugegeben und gleichmäßig verteilt wird,
c) das Gemisch aus b) in ein Werkzeug gegeben wird,
d) Wasserdampf gegebenenfalls unter Druck in das Werkzeug zur Erzeugung des Formteiles, Blockes oder Zylinders eingeleitet wird,
e) ausgehärtet wird und
f) das Formteil, der Block oder der Zylinder aus dem Werkzeug entfernt wird,
wobei der eingesetzte Polyurethanhartschaum unter a) ein offenzelliger Schaum mit einer Dichte von 5 bis 50 kg/m³ (gemessen nach DIN 53 420), einer Stauchhärte von 0,05 bis 0,2 MPa (gemessen nach DIN 53 421) und einer Offenzelligkeit von größer 50 % (bestimmt nach DIN ISO 4590-86) ist.

2. Verwendung der gemäß Anspruch 1 hergestellten Formkörper, Blöcke und Zylinder zur Herstellung von Fertigartikel-Laminaten, wie z.B. Türinnenverkleidungen, Hutablagen, Kofferraumauskleidungen und Dachhimmeln.

3. Verwendung der gemäß Anspruch 1 hergestellten Formkörper, Blöcke und Zylinder für die Trittschalldämmung im Baubereich.
